# EUROPÄISCHE PATENTANMELDUNG

(11) **EP 3 127 841 A1**
(43) Veröffentlichungstag der Anmeldung: **08.02.2017**
(21) Anmeldenummer: 15179866.7
(22) Anmeldetag: 05.08.2015
(51) Int. Cl.: B65G 53/66

(54) **ABFÜLLANLAGE UND VERSORGUNGSEINRICHTUNG FÜR EINE ABFÜLLANLAGE**

(71) Anmelder: Schulte, Reinhold, 33106 Paderborn (DE)
(72) Erfinder: Schulte, Reinhold, 33106 Paderborn (DE); Wortmann, Oliver, 59757 Ansberg (DE)
(74) Vertreter: REHBERG HÜPPE + PARTNER

(57) **Zusammenfassung**

Die Erfindung betrifft eine Versorgungseinrichtung (2) für eine Abfüllanlage (1), mit welcher ein rieselfähiges oder schüttfähiges Material in ein Behältnis, insbesondere einen Sack, gefüllt werden kann. Die Versorgungseinrichtung (2) verfügt über einen Versorgungsstrang (3), der der Bereitstellung eines Förderstroms eine Fluids, mit dem das Material transportiert wird, dient. Ein Entlüftungsstrang (9) zweigt von dem Versorgungsstrang (3) ab. In dem Entlüftungsstrang (9) ist ein Entlüftungsventil (13) angeordnet. Der Entlüftungsstrang dient dem Konstanthalten des Drucks in dem Versorgungsstrang (3). Schließlich ist ein Steuerstrang (15) vorhanden, über welchen die Steuerung des Entlüftungsventils (13) erfolgt. Erfindungsgemäß sind der Versorgungsstrang (3) und der Steuerstrang (15) fluidisch voneinander entkoppelt, wozu der Steuerstrang (15) über eine eigene Druckquelle (17) verfügt.

## Beschreibung

### TECHNISCHES GEBIET DER ERFINDUNG

Mittels Abfüllanlagen erfolgt ein Abfüllen eines rieselfähigen oder schüttfähigen Materials in Behältnisse wie beispielsweise Säcke. Hierzu wird das Material einem Förderstrom eines Fluids beigemischt, welches dann das Material in der Abfüllanlage transportiert und dem Behältnis zuführt. Der Förderstrom des Fluids wird hierbei von einer Versorgungseinrichtung bereitgestellt. Wünschenswert ist, dass die Versorgungseinrichtung das Fluid mit einem weitestgehend konstanten Druck bereitstellt, was auch für Unregelmäßigkeiten in der Abnahme des Förderstroms des Fluids (beispielsweise in Folge der Beimengung des Materials und/oder einem temporären Stoppen des Förderstroms des Fluids mit dem davon transportierten Material bei der Beendigung des Befüllens eines Behältnisses und dem Austausch des gefüllten Behältnisses gegen ein neues Behältnis) gelten soll.

Die Erfindung betrifft eine Versorgungseinrichtung für eine Abfüllanlage. Des Weiteren betrifft die Erfindung eine Abfüllanlage mit einer derartigen Versorgungseinrichtung.

### STAND DER TECHNIK

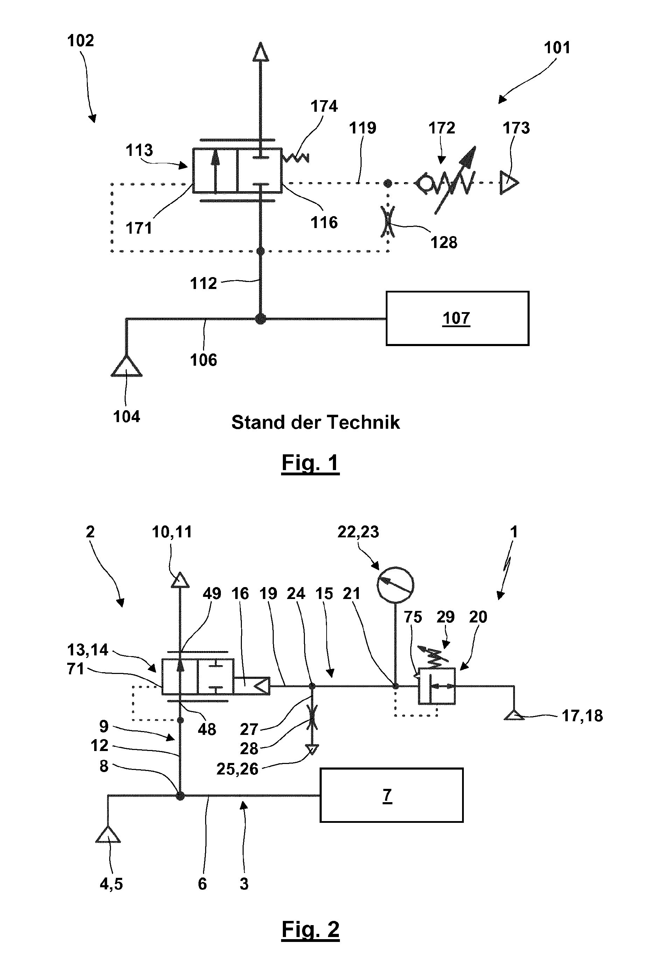

Fig. 1 zeigt schematisch eine Versorgungseinrichtung 102 für eine Abfüllanlage 101 gemäß dem Stand der Technik, bei welcher eine Versorgungsleitung 106 für eine Abfülleinrichtung 107 aus einer Druckquelle 104 mit Druck versorgt wird. Von der Versorgungsleitung 106 zweigt eine Entlüftungsleitung 112 ab, über welche zur Druckminderung bei zu großem Druck in der Versorgungsleitung 106 Fluid abgeführt werden kann. Ein in der Entlüftungsleitung 112 angeordnetes Entlüftungsventil 113 wird hierbei in Richtung einer Entlüftungsstellung an einem ersten Steuer-anschluss 171 mit dem ungedrosselten Druck in der Versorgungsleitung 106 beaufschlagt. Gleichzeitig wird das Entlüftungsventil 113 in entgegengesetzter Richtung, nämlich in Schließ-richtung, an einem zweiten Steueranschluss 116 von dem Druck in einer Steuerleitung 119 beaufschlagt ist. Die Steuerleitung 119 ist hierbei unter Zwischenschaltung einer Drossel 128 ebenfalls mit der Versorgungsleitung 106 verbunden. Dabei ist der Druck in der Steuerleitung 119 durch ein manuell verstellbares Druckbegrenzungsventil 172 begrenzt, über welches die Steuerleitung 119 mit einer Entlüftung 173 verbunden ist. Bei Oszillationen des Drucks in der Versorgungsleitung 106 führt der ungedrosselte Druckanstieg an dem ersten Steueranschluss 171 zu einer Kraft in Öffnungsrichtung, die sich schneller aufbauen kann als die Kraft in Schließrichtung, welche sich infolge des gedrosselten Drucks an dem zweiten Steueranschluss 116 ergibt, so dass einem schnellen Druckanstieg in der Versorgungsleitung 106 durch kurzzeitiges Öffnen des Entlüftungsventils 113 begegnet werden kann. Auch ein allmählicher Druckanstieg in der Versorgungsleitung 106 über einen Solldruck hinaus führt infolge des Drucks an dem ersten Steueranschluss 171 zu einer Kraft in Öffnungsrichtung, die größer ist die Kraft, welche der Druck in der Steuerleitung 119 an dem zweiten Steueranschluss 116 hervorruft, wenn der Druck in der Steuerleitung 119 durch das Druckbegrenzungsventil 172 gegenüber dem Druck in der Versorgungsleitung 106 und damit gegenüber dem Druck an dem ersten Steueranschluss 171 reduziert ist. Die erforderliche Druckdifferenz, die an den beiden Steueranschlüssen 116, 171 wirken muss, um eine Umschaltung des Entlüftungsventils 113 hervorzurufen, wird durch eine in Schließrichtung wirkende Feder 174 beeinflusst. Mit einer derartigen Versorgungseinrichtung 102 soll eine Regelung des Drucks in der Versorgungsleitung 106 auf einen möglichst konstanten Druck erfolgen, dessen Betrag durch Einstellung des Öffnungsdrucks des Druckbegrenzungsventils und Wahl der Feder und Vorgabe einer etwaigen Vorspannung derselben beeinflusst werden kann.

### AUFGABE DER ERFINDUNG

Der Erfindung liegt die Aufgabe zugrunde, eine Versorgungseinrichtung für eine Abfüllanlage bereitzustellen, welche sich durch geringe Druckschwankungen bei der Bereitstellung des Förderstroms des Fluids auszeichnet und/oder robust ist hinsichtlich der Auswirkungen etwaiger Verunreinigungen des Fluids. Des Weiteren liegt der Erfindung die Aufgabe zugrunde, eine entsprechend verbesserte Abfüllanlage vorzuschlagen.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Erfindungsgemäß wird eine Versorgungseinrichtung vorgeschlagen, die für eine Abfüllanlage für ein rieselfähiges oder schüttfähiges Material bestimmt ist. Bei diesem riesel- oder schüttfähigen Material handelt es sich beispielsweise um Festkörperpartikel gleicher oder unterschiedlicher Größe, ein staubartiges Material, ein Schüttgut, ein Pulver oder ein Granulat, wobei dieses auch mit mehreren unterschiedlichen durchmischten Teilmaterialien gebildet sein kann.

Die erfindungsgemäße Versorgungseinrichtung verfügt über einen Versorgungsstrang. Dieser dient einer Bereitstellung eines Förderstroms eines Fluids, mit welchem das Material durch die Abfüllanlage und zu den zu befüllenden Behältnissen transportiert wird. Zu diesem Zweck kann der Versorgungsstrang über eine Druckquelle wie einen Druckbehälter und/oder eine Pumpe verfügen.

Grundsätzlich ist der Druck in einem derartigen Versorgungsstrang nicht konstant. Dies kann begründet sein in Druckschwankungen der Druckquelle, insbesondere der Förderleistung einer Pumpe oder Druckänderungen in einem Behälter, und/oder in einem diskontinuierlichen Abnahmeverhalten des Fluids aus dem Versorgungsstrang, beispielsweise in Folge eines diskontinuierlichen Durchmischens mit dem Material und/oder in Folge der lediglich temporären Abnahme des Fluids mit der Unterbrechung der Abnahme bei einem Wechsel von dem Befüllen eines Behältnisses zu dem Befüllen eines anderen Behältnisses.

Um etwaigen möglichen Druckschwankungen in dem Versorgungsstrang entgegenwirken zu können, findet erfindungsgemäß ein Entlüftungsstrang Einsatz, der von dem Versorgungsstrang abzweigt. In dem Entlüftungsstrang ist ein Entlüftungsventil angeordnet. Der Entlüftungsstrang dient zur Beeinflussung des Drucks in dem Versorgungsstrang. Für ein einfaches Beispiel, welches die Erfindung nicht einschränken soll, kann einem etwaigen Druckanstieg in dem Versorgungsstrang entgegengewirkt werden, indem das Entlüftungsventil geöffnet wird, sodass Fluid von dem Versorgungsstrang über den Entlüftungsstrang abgeführt wird, womit dann dem Druckanstieg entgegengewirkt werden kann.

Schließlich verfügt die erfindungsgemäße Versorgungseinrichtung über einen Steuerstrang, über welchen das Entlüftungsventils (und damit die Beeinflussung der Abführung von Fluid über den Entlüftungsstrang und damit die Beeinflussung des Drucks in dem Versorgungsstrang) gesteuert werden kann. Hierbei umfasst im Rahmen der Erfindung eine "Steuerung" sowohl eine "Steuerung" als auch eine "Regelung".

Erfindungsgemäß sind der Versorgungsstrang und der Steuerstrang fluidisch voneinander entkoppelt. Insbesondere werden der Versorgungsstrang einerseits und der Steuerstrang andererseits nicht über dieselbe Druckquelle, sondern über unterschiedliche Druckquellen mit unter Druck stehendem Fluid, insbesondere Druckluft, versorgt. Durch die fluidische Entkopplung des Versorgungsstrangs einerseits und des Steuerstrangs andererseits können unerwünschte fluidische Wechselwirkungen zwischen dem Versorgungsstrang und dem Steuerstrang vermieden werden, womit beispielsweise instabile Steuerungs- oder Regelungsprozesse vermieden werden können.

Im Rahmen der Erfindung kann das Entlüftungsventil in beliebiger Ausgestaltung ausgebildet sein. So kann dies beispielsweise in Schieberbauart oder als Sitzventil ausgebildet sein. Möglich ist, dass es sich bei dem Entlüftungsventil um ein Mehrstellungsventil handelt, wobei unterschiedliche Betriebsstellungen des Entlüftungsventils in unterschiedlichen Entlüftungsquerschnitten bestehen können. Vorzugsweise findet als Entlüftungsventil aber ein Ventil Einsatz, welches nicht lediglich diskrete Schaltstellungen und zugeordnete Entlüftungsquerschnitte besitzt, sondern welches als Proportionalventil ausgebildet ist, dessen Schaltstellungen kontinuierlich veränderbar sind mit einer kontinuierlichen Veränderung des Entlüftungsquerschnitts. Hierbei kann das Proportionalventil elektrisch, pneumatisch oder elektropneumatisch angesteuert sein. Möglich ist hierbei auch, dass das Proportionalventil eine lineare oder eine nicht lineare Volumenstromkennlinie aufweist.

Gemäß einem besonderen Vorschlag der Erfindung ist das Proportionalventil von dem Steuerstrang pneumatisch gesteuert.

Im Rahmen der Erfindung ist durchaus möglich, dass der Steuerstrang geschlossen ausgebildet ist, womit in diesem lediglich die fluidische Beaufschlagung eines Steueranschlusses des Entlüftungsventils erfolgt und das Fluid je nach Steuerdruck und Betriebsstellung eines etwaigen steuernden Ventilkörpers des Entlüftungsventils in dem Steuerstrang hin- und herbewegt wird. In bevorzugter Ausgestaltung der Erfindung ist der Steuerstrang über eine Drossel, worunter auch eine Blende verstanden werden kann, mit einer Drucksenke, insbesondere einer Entlüftung, verbunden. Dies hat zur Folge, dass der Steuerstrang unabhängig von der Betriebsstellung des Entlüftungsventils (zumindest in einem Teilstrang zwischen der Druckquelle und einem Abzweig zu der Drucksenke) ständig durchströmt ist. Beispielsweise hat dies den Vorteil, dass etwaige Verunreinigungen des Fluids in dem Steuerstrang nicht in dem Steuerstrang hin- und herbewegt werden, wo diese die Funktionsweise der Bauelemente, insbesondere des Entlüftungsventils, beeinträchtigen können. Vielmehr kann über die ständige Durchströmung des Steuerstrangs in Folge der Verbindung mit der Drucksenke über die Drossel auch eine Abführung etwaiger Verunreinigungen in die Drucksenke oder die Umgebung ermöglicht werden. Andererseits führt eine Bewegung eines steuernden Ventilkörpers des Entlüftungsventils dazu, dass eine Verdrängung des steuernden Fluids in dem Steuerstrang erfolgt. Um eine hiermit verbundene Druckerhöhung in dem Steuerstrang zu vermeiden, müssen grundsätzlich die fluidischen Bauelemente des Steuerstrangs und die Leitungsquerschnitte geeignet dimensioniert werden. Hingegen ist bei Verbindung des Steuerstrangs über eine Drossel mit einer Drucksenke möglich, dass eine Teil des in Folge der Bewegung des steuernden Ventilkörpers verdrängten Fluids über die Drossel in die Drucksenke abgeführt wird, womit die Anforderungen an die fluidischen Bauelemente des Steuerstrangs reduziert werden können.

Von Vorteil ist, wenn für einen weiteren Vorschlag der Erfindung das Entlüftungsventil ohne Hysterese ausgebildet ist. Hierbei wird unter einem Entlüftungsventil *"ohne Hysterese*" noch ein Entlüftungsventil verstanden, bei welchem sich ein Öffnungsdruck des Entlüftungsventils und ein Schließdruck des Entlüftungsventils maximal um 10 %, insbesondere maximal um 5 % oder 2 %, unterscheiden.

Für die Gewährleistung, dass das Entlüftungsventil ohne Hysterese ausgebildet ist, gibt es grundsätzlich im Rahmen der Erfindung vielfältige Möglichkeiten. In besondere Ausgestaltung der Erfindung wird vorgeschlagen, dass in dem Entlüftungsventil in einer Öffnungsstellung ein Eingangsanschluss über eine Drossel mit dem Ausgangsanschluss verbunden ist. Dieser Ausgestaltung liegt die Erkenntnis zugrunde, dass eine mögliche Ursache für die Ausbildung einer Hysterese ist, dass an einem Ventilkörper des Entlüftungsventils in der Schließstellung lediglich eine Teilfläche des Ventilkörpers mit dem von dem Eingangsanschluss strömenden Fluid beaufschlagt ist, während in einer Öffnungsstellung der gesamte Ventilkörper mit dem von dem Eingangsanschluss strömenden Fluid beaufschlagt ist. Für ungedrosselten Übertritt des Fluids zwischen dem Eingangsanschluss und dem Ausgangsanschluss korreliert die Hysterese mit dem Verhältnis der Flächen des Ventilkörpers, die zum einen in der Schließstellung und zum anderen in der Öffnungsstellung mit dem Fluid beaufschlagt werden. Erfolgt hingegen eine Drosselung zwischen dem Eingangsanschluss und dem Ausgangsanschluss, kann je nach Drosselcharakteristik ein mehr oder weniger großer Druckabfall zwischen Eingangsanschluss und Ausgangsanschluss herbeigeführt werden. Die mit Überführung in die Öffnungsstellung des Entlüftungsventils hinzukommende, mit dem Fluid beaufschlagte Teilfläche ist dabei dem in Folge der Drosselwirkung niedrigen Druck an dem Ausgangsanschluss ausgesetzt. Mit Vergrößerung der Drosselwirkung sinkt somit der Einfluss der Wirkung des Fluids auf die unterschiedlichen Teilflächen des Ventilkörpers des Entlüftungsventils. Wirkt an dem Ausgangsanschluss der Umgebungsdruck, kann sogar der erläuterte Einfluss vollständig beseitigt werden. Ebenfalls möglich ist, dass die Anordnung einer Drossel zwischen dem Eingangsanschluss und dem Ausgangsanschluss des Entlüftungsventils vorteilhaft ist, damit die Überführung des Entlüftungsventils in die Öffnungsstellung nicht "abrupt" eine Veränderung der Kraftverhältnisse an dem Entlüftungsventil zur Folge hat und abrupt ein fluidischer Strom durch das Entlüftungsventil herbeigeführt wird, womit unter Umständen das Regel- und Betriebsverhalten der Versorgungseinrichtung und/oder der Abfüllanlage verbessert werden kann.

Sofern das Entlüftungsventil als Sitzventil ausgebildet ist, kann in diesem ein beliebiger Ventilkörper Einsatz finden, welcher in der Schließstellung zur Anlage an einen zugeordneten Ventilsitz kommt. Für eine erfindungsgemäße Versorgungseinrichtung besitzt das Entlüftungsventil eine Membran, welche zumindest teilweise den Ventilkörper bildet. Die Membran verschließt in einer Schließstellung des Entlüftungsventils einen Ventilsitz. Die Membran ist in Richtung einer Öffnungsstellung von dem Druck in dem Versorgungsstrang beaufschlagt, welcher dem Entlüftungsventil über den zugeordneten Eingangsanschluss zugeführt wird. Hiervon ist auch umfasst, dass die Beaufschlagung in Richtung der Öffnungsstellung mit einem Druck erfolgt, welcher beispielsweise in Folge einer Drosselung auf dem Weg zu dem Entlüftungsventil reduziert ist, aber von dem Druck in dem Versorgungsstrang abhängig ist. Schließlich ist die Membran mechanisch mit einem Steuerkolben gekoppelt. Der Steuerkolben ist mit dem Druck in dem Steuerstrang beaufschlagt, womit dieser die Membran in Richtung der Schließstellung beaufschlagt. Hierbei ist durchaus möglich, das die Membran auf beiden Seiten fluidisch beaufschlagt ist. Möglich ist aber auch, dass die Membran lediglich auf einer Seite mit dem Druck an dem Eingangsanschluss und/oder Ausgangsanschluss des Entlüftungsventils beaufschlagt ist, während die andere Seite der Membran fluidisch nicht beaufschlagt ist und eine Beaufschlagung in Richtung der Schließstellung ausschließlich über den Steuerkolben erfolgt.

Vorteilhaft ist u. U., wenn bei einer Ausgestaltung des Entlüftungsventils mit einer Membran eine fluidische Trennung einerseits des Steuerstrangs und andererseits des Entlüftungsstrangs durch die Membran erfolgt. Im Gegensatz zur Ausbildung eines Entlüftungsventils als Sitzventil oder als Schieberventil kann auf diese Weise vermieden werden, dass in Rückräumen, Spalten und/oder Todräumen eine Ablagerung von Verunreinigungen erfolgt. Vielmehr ist vorzugsweise auf einer Seite der Membran eine ständige Durchströmung von Fluid in dem Entlüftungsstrang (zumindest in Öffnungsstellung der Membran) gewährleistet, während auf der anderen Seite der Membran der Steuerstrang wirken kann, insbesondere ebenfalls mit einer Entkopplung des Rückraums der Membran durch Wirkung des Drucks in dem Steuerstrang auf den mit der Membran gekoppelten Steuerkolben.

Für die Bildung der Drossel zwischen dem Eingangsanschluss und dem Ausgangsanschluss des Entlüftungsventils gibt es vielfältige Möglichkeiten. So kann die Drossel beispielsweise in einem Eingangskanal und/oder Ausgangskanal des Lüftungsventils angeordnet sein. Für einen besonderen Vorschlag der Erfindung bildet die Membran einen Drosselkörper aus oder trägt die Membran einen Drosselkörper. In diesem Fall bildet der Drosselkörper mit dem Ventilsitz die Drossel. Grundsätzlich kann hierbei die Drosselwirkung, welche zwischen Ventilsitz und Drosselkörper erzeugt wird, von der Betriebsstellung der Membran unabhängig sein. Möglich ist aber auch, dass die Drosselwirkung von der Betriebsstellung der Membran, also dem Abstand der Membran von dem Ventilsitz, abhängig ist. Beispielsweise kann der Drosselkörper zylindrisch oder kegelförmig ausgebildet sein oder mit einem anderen verjüngten oder sich erweiternden Körper (insbesondere mit gekrümmter Außenkontur) ausgebildet sein, welcher sich mit von der Betriebsstellung abhängiger Erstreckung durch den Ventilsitz erstreckt. Die Beeinflussung der Drosselwirkung von der Betriebsstellung kann hierbei erfolgen durch eine Veränderung des Drosselquerschnitts je nach Betriebsstellung und/oder Veränderung der Erstreckung des Drossellängsschnittes durch den Ventilsitz je nach Betriebsstellung.

Möglich ist, dass als Druckquelle in dem Steuerstrang eine Pumpe dient. Möglich ist aber auch, dass in dem Steuerstrang ein Vorratsbehälter angeordnet ist. Ein derartige Vorratsbehälter dient grundsätzlich als eine Art "Filter" für den in dem Steuerstrang herrschenden Druck, da unterschiedliche fluidische Volumina in dem Steuerstrang, insbesondere in Folge einer Stellbewegung des steuernden Ventilkörpers des Entlüftungsventils und/oder in Folge einer unregelmäßigen Förderleistung einer Pumpe, geringere Druckschwankungen zur Folge haben, wenn das Volumen des Fluids in dem Steuerstrang größer ist, sodass das mit dem Vorratsbehälter bereitgestellte "Zusatzvolumen" zur Reduzierung von Druckschwankungen führt. Insbesondere ist die Nutzung eines Vorratsbehälters in dem Steuerstrang vorteilhaft, wenn die Entfernung zwischen der Druckquelle des Steuerstrangs und dem Entlüftungsventil groß ist oder die zwischen Pumpe und Entlüftungsventil in dem Steuerstrang eingesetzten Leitungen und/oder fluidischen Bauelemente zu einer starken Drosselung führen. In diesem Fall ist es vorteilhaft, wenn der Vorratsbehälter in kleiner Entfernung zu dem Entlüftungsventil angeordnet ist.

Ausreichend sein kann, dass der Druck in dem Steuerstrang möglichst konstant gehalten wird, womit die Abführung von Fluid aus dem Versorgungsstrang über das Entlüftungsventil ebenfalls konstant ist. Für einen weiteren Vorschlag der Erfindung ist der Druck in dem Steuerstrang einstellbar, womit auch die Abführung von Fluid aus dem Versorgungsstrang eingestellt werden kann und somit der Förderstrom des Fluids durch den Versorgungsstrang beeinflusst werden kann.

Möglich ist hierbei, dass die Einstellung des Drucks in dem Steuerstrang durch manuelle Vorgabe oder sogar manuelle Einstellung durch den Benutzer erfolgt.

Möglich ist auch, dass das Druckregelventil über einen elektromotorischen Aktuator verfügt, über den eine Verstellung eines Betriebspunktes des Druckregelventils erfolgen kann. Hierbei kann der elektromotorische Aktuator von dem Benutzer gesteuert werden. Ebenfalls möglich ist dass der elektromotorische Aktuator geregelt ist unter Auswertung des Drucks in dem Steuerstrang und/oder Entlüftungsstrang und/oder Versorgungsstrang.

In alternativer Ausgestaltung ist das Druckregelventil über eine elektropneumatische Vorsteuereinheit gesteuert. Die elektropneumatische Vorsteuereinheit wird hierbei von einer Steuereinheit angesteuert oder es erfolgt ein gesteuerter Betrieb oder ein geregelter Betrieb je nach Drucksignal im Steuerstrang, Entlüftungsstrang und/oder Versorgungsstrang. Die elektropneumatische Vorsteuereinheit kann hierbei mit einem oder mehreren elektropneumatischen Vorsteuerventilen gebildet sein, wobei das mindestens eine elektropneumatische Vorsteuerventil in beliebiger Bauart und mit beliebigen Betriebsstellungen ausgebildet sein kann. Vorzugsweise handelt es sich um ein elektropneumatisches Proportionalventil, ein pulsweitenmoduliertes Ventil u. ä.

Grundsätzlich möglich ist, dass die pneumatische Versorgung der elektropneumatischen Vorsteuereinheit separat von der Druckquelle des Steuerstrangs ausgebildet ist. Für einen besonderen Vorschlag der Erfindung wird die elektropneumatische Vorsteuereinheit aus der Druckquelle, welche hier eine pneumatische Druckquelle ist, des Steuerstrangs versorgt wird.

Durchaus möglich ist aber auch, dass das Druckregelventil unmittelbar elektromagnetisch gesteuert oder geregelt ist.

Über den Druck in dem Steuerstrang kann auf die Druckverhältnisse an einem Steueranschluss des Entlüftungsventils und damit auf die Kraftverhältnisse an dem Entlüftungsventil sowie auf die Betriebsstellung des Entlüftungsventils eingewirkt werden. Während grundsätzlich möglich ist, dass der Druck in dem Steuerstrang in Öffnungsrichtung auf das Entlüftungsventil wirkt und/oder der Druck in dem Versorgungsstrang in Schließrichtung auf das Entlüftungsventil wirkt, wird für einen weiteren Vorschlag der Erfindung das Entlüftungsventil in Schließrichtung von dem Druck in dem Steuerstrang beaufschlagt und/oder in Öffnungsrichtung von dem Druck in dem Versorgungsstrang beaufschlagt. In diesem Fall gibt der Druck in dem Steuerstrang die Kraft vor, welche durch den Druck in dem Versorgungsstrang erzeugt werden muss, um das Entlüftungsventil zu öffnen. Je höher somit der Druck in dem Steuerstrang ist, desto höher ist der gesteuerte oder geregelte Druck in dem Versorgungsstrang. Möglich ist hierbei, dass in Schließrichtung die Kraftverhältnisse an dem Entlüftungsventil ausschließlich durch den Druck in dem Steuerstrang vorgegeben werden, während alternativ möglich ist, dass zusätzlich in Schließrichtung auch eine mechanische Feder wirkt.

Die Erfindung umfasst auch Versorgungseinrichtungen, bei welchen das Druckregelventil einerseits und das Entlüftungsventil andererseits separat voneinander ausgebildet sind und über eine Steuerleitung miteinander verbunden sind. Für eine erfindungsgemäße Versorgungseinrichtung bilden aber das Druckregelventil und das Entlüftungsventil eine Baueinheit, wobei beispielsweise ein Druckregelventil an das Entlüftungsventil angeflanscht oder angeschraubt sein kann. Alternativ können das Druckregelventil und das Entlüftungsventil in einem gemeinsamen Gehäuse angeordnet sein. Möglich ist sogar auch, dass die zuvor erläuterte Drossel, über welche die ständige Durchströmung des Steuerstrangs gewährleistet ist, ebenfalls in die Baueinheit integriert ist.

Eine weitere Lösung der der Erfindung zugrunde liegenden Aufgabe stellt eine Abfüllanlage mit einer Versorgungseinrichtung, wie diese zuvor erläutert worden ist, dar.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt schematisiert eine Versorgungseinrichtung für eine Abfüllanlage gemäß dem Stand der Technik.
- **Fig. 2** bis **6**: zeigen schematisiert unterschiedliche erfindungsgemäße Ausgestaltungen einer Versorgungseinrichtung für eine Abfüllanlage.
- **Fig. 7** und **8**: zeigen eine mit einem Entlüftungsventil und einem Druckregelventil gebildete Baueinheit als Bestandteil einer erfindungsgemäßen Versorgungseinrichtung, wobei Fig. 7 das Entlüftungsventil in seiner Schließstellung zeigt, während Fig. 8 das Entlüftungsventil in einer Öffnungsstellung zeigt.

### FIGURENBESCHREIBUNG

**Fig. 2** zeigt eine Abfüllanlage 1 mit einer Versorgungseinrichtung 2. Die Versorgungseinrichtung 2 verfügt über einen Versorgungsstrang 3. In dem Versorgungsstrang 3 erfolgt eine Bereitstellung eines Fluids unter Druck, insbesondere von Druckluft, über eine Druckquelle 4, insbesondere eine Pumpe 5. Die Druckquelle 4 ist über eine Versorgungsleitung 6 mit einer Abfülleinrichtung 7 der Abfüllanlage 1 verbunden. Beispielweise erfolgt in der Abfülleinrichtung 7 in an sich bekannter Weise eine Beimengung des Materials zu dem über den Versorgungsstrang 3 bereitgestellten Fluid, eine Aufbereitung des Gemisches aus dem Fluid und dem Material sowie die dosierte Abgabe des Materials mit dem Fluid zu einem Behältnis, wobei auch möglich ist, dass in der Abfülleinrichtung 7 eine Verzweigung zu mehreren parallelen Abfüllsträngen erfolgt, über welche parallel das Befüllen von Behältnissen mit dem Material erfolgt. Vorzugsweise erfolgt eine intermittierende Abgabe von Material durch die Abfülleinrichtung 7, wozu vorzugsweise über eine Art Ventil oder Abgabeeinrichtung die Abgabe von Material unterbrochen werden kann. Mittels der Versorgungseinrichtung 2 soll der Abfülleinrichtung 7 vorzugsweise unabhängig von dem Betriebszustand der Abfülleinrichtung 7 Fluid mit einem konstanten Druck zugeführt werden.

An einer Verzweigung 8 zweigt von der Versorgungsleitung 6 ein Entlüftungsstrang 9 ab, welcher an einer Drucksenke 10, hier einer Entlüftung 11, endet. In einer Entlüftungsleitung 12 des Entlüftungsstrangs ist ein Entlüftungsventil 13 angeordnet, welches mindestens eine Öffnungsstellung, vorzugsweise mehrere Öffnungsstellungen mit unterschiedlichen Öffnungsquerschnitten, und eine Schließstellung besitzt. Für das dargestellte Ausführungsbeispiel ist das Entlüftungsventil 13 als Proportionalventil 14 ausgebildet, welches je nach Betriebsstellung unterschiedliche (vorzugsweise kontinuierlich veränderbare) Entlüftungsquerschnitte besitzt. Das Entlüftungsventil 13 ist über einen ersten Steueranschluss 71 mit dem Druck in der Entlüftungsleitung 12 (und damit dem Druck in der Versorgungsleitung 6) in Öffnungsrichtung beaufschlagt. Das Entlüftungsventil 13 besitz einen Eingangsanschluss 48, der mit dem Versorgungsstrang 3 verbunden ist, und einen Ausgangsanschluss 49, der mit der Drucksenke 10 verbunden ist.

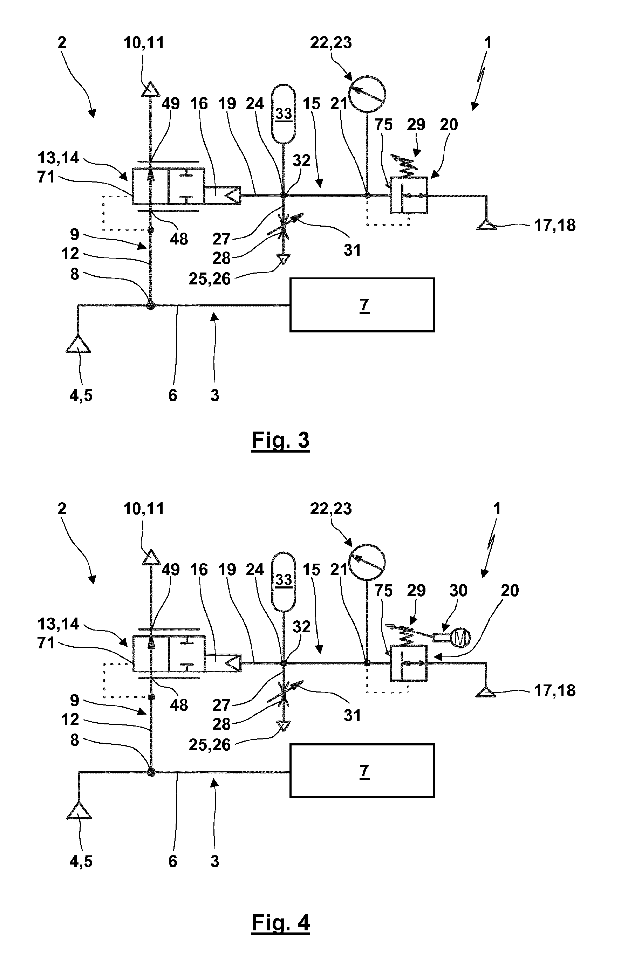

Über einen Steuerstrang 15 erfolgt die fluidische Ansteuerung eines zweiten Steueranschlusses 16 des Entlüftungsventils 13. Hierbei wirkt der Druck an dem zweiten Steueranschluss 16 entgegengesetzt zu dem Druck an dem ersten Steueranschluss 71, nämlich in Schließrichtung. Somit ist die von dem Entlüftungsventil 13 eingenommene Betriebsstellung abhängig von der Druckdifferenz an den beiden Steueranschlüssen 16, 71. Der Steuerstrang 15 verfügt über eine Druckquelle 17, vorzugsweise eine Pumpe 18, über welche der Steuerstrang 15 mit einem druckbeaufschlagten Fluid, insbesondere Druckluft, versorgt wird. Die Druckquelle 17 des Steuerstrangs 15 ist separat von der Druckquelle 4 des Versorgungsstrangs 3 ausgebildet. Der Steuerstrang 15 ist fluidisch von dem Versorgungsstrang 3 getrennt (wobei hierbei durchaus möglich ist, dass die beiden Entlüftungen 11, 26 baulich zusammengefasst sind). In einer Steuerleitung 19, welche sich von der Druckquelle 17 zu dem Steueranschluss 16 erstreckt, ist ein Druckregelventil 20 angeordnet, welches den Druck an dem Steueranschluss 16 vorgibt, insbesondere indem dieses die von der Druckquelle 4 geförderte Druckluft mit Überschreiten eines Schwellwertes des Drucks einer Entlüftung 75 zuführt. Des Weiteren ist über eine Verzweigung 21 eine Anzeigeeinrichtung 22, bei welcher es sich auch um einen Sensor 23 mit hieran angeschlossenem Display handeln kann, angeschlossen, über welche eine Erfassung und Anzeige eines Drucks in der Steuerleitung 19 möglich ist. Über eine weitere Verzweigung 24 ist die Steuerleitung 19 mit einer zu einer Drucksenke 25 oder Entlüftung 26 führenden Durchflussleitung 27 verbunden. In der Durchflussleitung 27 ist eine Drossel 28, vorzugsweise eine Blende, angeordnet. Das Druckregelventil 20 ist einstellbar über eine Einstelleinrichtung 29, wobei die Einstelleinrichtung 29 von einem Betreiber manuell, beispielsweise über ein Stellrad, betätigt werden kann oder gemäß **Fig. 4** über einen elektromotorischen Aktuator 30 betätigt werden kann. Bei Einsatz eines elektromotorischen Aktuators 30 kann die Betätigung des Aktuators 30 wiederum manuell durch den Betreiber, insbesondere durch Betätigung eines Schalters oder eines stufenlosen Stellorgans, erfolgen oder es kann eine Steuerung oder Regelung der Betätigung des Aktuators 30 durch eine elektronische Steuereinheit erfolgen.

### Der Betrieb der Abfüllanlage 1 erfolgt vorzugsweise wie folgt:

Mittels der Druckquelle 4 erfolgt die Bereitstellung von Fluid unter Druck zu der Abfülleinrichtung 7, mit welcher kontinuierlich oder diskontinuierlich Fluid aus dem Versorgungsstrang 3 entnommen wird. Hierbei teilt sich das von der Druckquelle 4 bereitgestellte Fluid auf einerseits in das von der Abfülleinrichtung 7 entnommene Fluid sowie andererseits ein etwaiges, je nach Öffnungsstellung des Entlüftungsventils 13 über den Entlüftungsstrang 9 abgeführtes Fluid. Somit kann je dem Volumenstrom des über das Entlüftungsventil 13 und den Entlüftungsstrang 9 abgeführten Fluids der Druck und der Volumenstrom in dem Versorgungsstrang 3 und damit der Abfülleinrichtung 7 beeinflusst werden. Hierbei kann die Beeinflussung gesteuert werden über die fluidische Beaufschlagung des Steueranschlusses 16 über den Steuerstrang 15. Über die Betätigung der Einstelleinrichtung 29 kann somit letztendlich beeinflusst werden, wieviel Fluid von dem Versorgungsstrang 3 zu der Abfülleinrichtung 7 bereitgestellt wird. Ergibt sich eine Druckerhöhung in dem Versorgungsstrang, kann sich in Folge einer veränderten Druckdifferenz zwischen den Steueranschlüssen 16, 71 des Entlüftungsventils 13 bereits eine veränderte Durchströmung durch den Entlüftungsstrang 9 ergeben. Ergänzend kann durch Einwirken auf die Einstelleinrichtung 29 die Betriebsstellung des Entlüftungsventils 13 verändert werden, womit einer Druckveränderung in dem Versorgungsstrang 3 entgegengewirkt werden kann. Hierbei kann über das Druckregelventil 20 sowohl eine Druckerhöhung herbeigeführt werden, welche durch Verbindung mit der Druckquelle 17 erfolgt, als auch eine Druckminderung durch Verbindung mit der Entlüftung 75 herbeigeführt werden. Möglich ist, dass über die Anzeigeeinrichtung unmittelbar die Druckverhältnisse in dem Steuerstrang 15 angezeigt werden. Möglich ist aber auch, dass durch den Sensor 23 eine Umwandlung des Drucks in dem Steuerstrang 15 in ein Messsignal erfolgt, welche mit den Druck- und/oder Durchflussverhältnissen in dem Versorgungsstrang 3 korreliert. Möglich ist des Weiteren, dass die Betätigung der Einstelleinrichtung 29 koordiniert mit dem Betrieb der Abfülleinrichtung 7 erfolgt. Um lediglich ein einfaches, die Erfindung nicht beschränkendes Beispiel zu nennen, kann für den Fall, dass die Abfülleinrichtung 7 für einen Wechsel eines zu befüllenden Behältnisses kurzzeitig abgesperrt wird, gleichzeitig mit dem Absperren der Abfülleinrichtung 7 eine Betätigung der Einstelleinrichtung 29 derart erfolgt, dass das Entlüftungsventil 13 in eine (weitere) Öffnungsstellung überführt wird, sodass anstelle der Abnahme von Fluid durch die Abfülleinrichtung 7 eine Ableitung des Fluids über den Entlüftungsstrang 9 erfolgen kann.

Über die Durchflussleitung 27 ist eine ständige Ableitung von Fluid aus dem Steuerstrang 15 ermöglicht. Dies hat zur Folge, dass immer wieder Druckluft von der Druckquelle 17 durch das Druckregelventil 20 und die Steuerleitung 19 zu der Drucksenke 25 gefördert wird, womit auch ein Abtransport etwaiger Verunreinigungen erfolgen kann. Hierbei kann über die Vorgabe der Drosselcharakteristik der Drossel 28 vorgegeben werden, wie groß der über die Drucksenke 25 abgeförderte Volumenstrom ist und letztendlich auch der Wirkungsgrad in dem Steuerstrang 15 beeinflusst werden.

Vorzugsweise handelt es sich bei dem Entlüftungsventil 13 mit dem Steueranschluss 71 um ein Druckbegrenzungsventil oder Druckregelventil, dessen Begrenzungs- oder Regeldruck über den Druck an dem zweiten Steueranschluss 16 beeinflusst oder vorgegeben werden kann.

Während gemäß dem Ausführungsbeispiel in Fig. 2 die Drossel 28 eine fest vorgegebene Drosselcharakteristik besitzt, ist für die Ausführungsform gemäß **Fig. 3** die Drosselcharakteristik über eine Einstelleinrichtung 31 veränderbar. Hierbei kann die Betätigung der Einstelleinrichtung 31 manuell von dem Betreiber oder automatisiert durch eine Steuereinrichtung erfolgen, wobei eine Betätigung der Einstelleinrichtung 31 manuell oder automatisch und unabhängig oder in koordinierter Weise mit der Betätigung der Einstelleinrichtung 29 und/oder von dem Betriebszustand der Abfülleinrichtung 7 erfolgen kann.

Für die Ausführungsbeispiele gemäß Fig. 3 und 4 ist an die Steuerleitung 19 über eine Verzweigung 32 ein Vorratsbehälter 33 angeschlossen, über welchen eine ergänzende Beeinflussung, insbesondere ein Konstanthalten und ein Dämpfen von Oszillationen, der Druckverhältnisse in dem Steuerstrang 15 möglich ist.

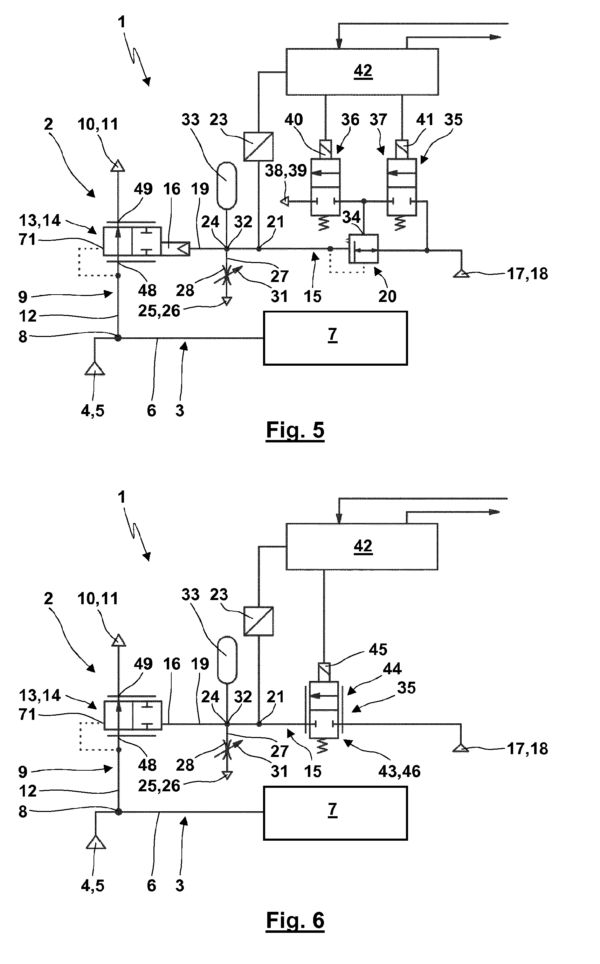

Für das Ausführungsbeispiel gemäß **Fig. 5** ist, bei ansonsten den vorangegangenen Figuren entsprechende Ausgestaltung, das Druckregelventil 20 über einen Steueranschluss 34 fluidisch gesteuert. Die fluidische Beaufschlagung des Steueranschlusses 34 erfolgt über eine elektropneumatische Vorsteuereinheit 35. Für das dargestellte Ausführungsbeispiel ist die Vorsteuereinheit 35 mit zwei 2/2-Wege-Magnetventilen 36, 37 gebildet, welche jeweils eine Sperrstellung und eine Durchlassstellung aufweisen. Das 2/2-Wege-Magnetventil 36 verbindet in seiner Durchlassstellung den Steueranschluss 34 mit einer Drucksenke 38 oder Entlüftung 39, während das 2/2-Wege-Magnetventil in seiner Durchlassstellung den Steueranschluss 34 mit dem Steuerstrang, hier der Druckquelle 17 oder Pumpe 18, verbindet. Somit kann je nach Bestromung der 2/2-Wege-Magnetventile 36, 37 der Steueranschluss 34 be- und entlüftet werden. Möglich ist, dass mit einer lediglich temporären Öffnung eines der 2/2-Wege-Magnetventile 36, 37 an dem Steueranschluss 34 ein Druck erzeugt wird, welcher größer ist als der Druck an der Drucksenke 38 und kleiner ist als der Druck an der Druckquelle 17, wobei zu diesem Zweck auch möglich ist, dass die 2/2-Wege-Magnetventile 36, 37 pulsweitenmoduliert betrieben werden.

Die 2/2-Wege-Magnetventile 36, 37 verfügen über elektrische Steueranschlüsse 40, 41. Diese werden zur Herbeiführung der unterschiedlichen genannten Ventilstellungen angesteuert über eine elektronische Steuereinheit 42. Letztendlich kann über die Steuereinheit 42 der Druck in dem Steuerstrang 15, die Betriebsstellung des Entlüftungsventils 13 und damit der Druck in dem Versorgungsstrang 3 vorgegeben werden. Möglich ist, dass hierzu die Steuereinheit 42 ein von dem Betreiber über einen Schalter oder einen Regler vorgegebenes Signal umsetzt. Möglich ist auch, dass die Steuereinheit die Vorsteuereinheit 35 zur Regelung eines Solldrucks in dem Steuerstrang 15 ansteuert. Zu diesem Zweck kann der Steuereinheit 42 ein Drucksignal zugeführt werden, welches von dem Sensor 23 in dem Steuerstrang 15 erfasst wird. Schließlich ist auch möglich, dass die Steuereinheit 42 eine automatische Regelung derart vornimmt, dass gewünschte fluidische Verhältnisse in dem Versorgungsstrang 3, insbesondere gewünschte Druckverläufe und/oder Volumenströme in dem Versorgungsstrang 3, gewährleistet sind. Zu diesem Zweck kann beispielsweise die Steuereinheit 42 die Ansteuerung der Vorsteuereinheit 35 in Abhängigkeit von einem in dem Versorgungsstrang 3 erfasste Drucksignal und/oder in Abhängigkeit von einem Betriebszustand der Abfülleinrichtung 7 ansteuern.

Für die Ausführungsbeispiele gemäß Fig. 2 bis 5 war das Druckregelventil 20 rein pneumatisch gesteuert. Insbesondere war hier keine elektrische Ansteuerung des Druckregelventils 20 selbst vorhanden. Die Steuerung der Betriebsstellung des Druckregelventils 20 erfolgte hier durch die Rückführung des Drucks in der Steuerleitung 19 bzw. an dem Steueranschluss 16 über die gestrichelte Leitung, sodass die Betriebsstellung des Druckregelventils von dem Druck an dem Steueranschluss 16 abhängig war und dieser Druck auf eine Ventilfläche des Druckregelventils 20 eingewirkt hat. Hingegen findet für das in **Fig. 6** dargestellte Ausführungsbeispiel (bei ansonsten im wesentlichen Fig. 5 entsprechende Ausgestaltung) ein Druckregelventil 43 Einsatz, dessen Betriebsstellung nicht unmittelbar von den wirkenden pneumatischen Drücken abhängig ist, sodass hier kein pneumatischer Druck, insbesondere nicht der Druck an dem Steueranschluss 16, auf einen Ventilkörper des Druckregelventils 43 einwirkt. Vielmehr ist hier das Druckregelventil 43 als Magnetventil 44 ausgebildet, welches über einen elektrischen Steueranschluss 45 von der Steuereinheit 42 elektrisch angesteuert wird. Durchaus möglich ist, dass das Magnetventil 44 als pulsweitenmoduliertes Ventil ausgebildet ist, sodass auch für den Fall, dass das Magnetventil 44 lediglich eine Öffnungs- und eine Schließstellung besitzt, je nach Pulsweitenmodulation unterschiedliche Drücke an dem Steueranschluss 16 des Entlüftungsventils 13 herbeigeführt werden können. Für das dargestellte Ausführungsbeispiel ist aber das Magnetventil 44 als elektromagnetisch gesteuertes Proportionalventil 46 ausgebildet, bei welchem sich je nach Bestromung des Steueranschlusses 45 ein sich kontinuierlich verändernder Öffnungsquerschnitt des Druckregelventils 43 ergibt. Hier erfolgt die Regelung der Betriebsstellung des Druckregelventils 43 einerseits in Abhängigkeit von dem Drucksignal des Sensors 23. Wie zuvor erläutert kann aber auch die Ansteuerung des Magnetventils 44 durch die Steuereinheit 42 in Abhängigkeit von der Vorgabe eines Betreibers und/oder in Abhängigkeit von weiteren Betriebsgrößen, insbesondere der Abfülleinrichtung 7, erfolgen.

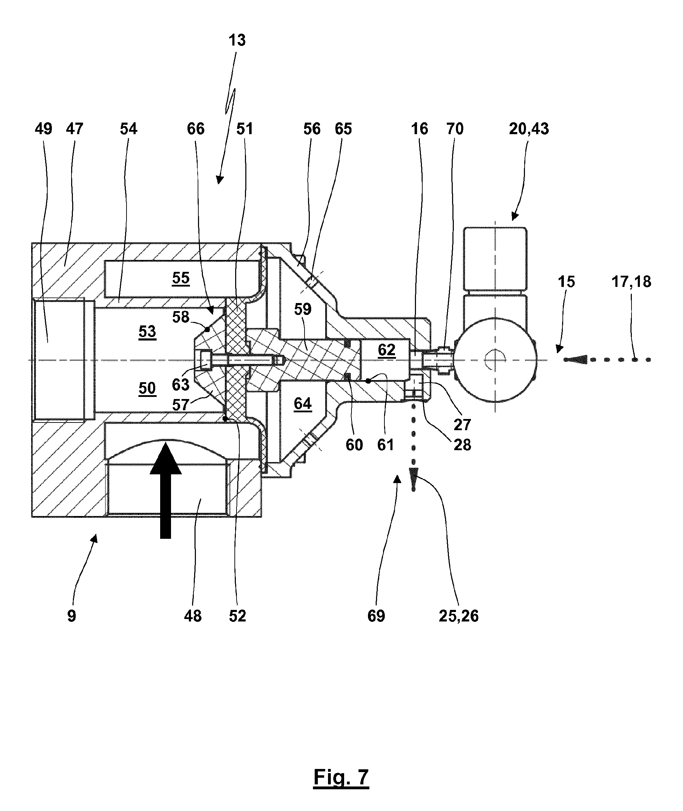

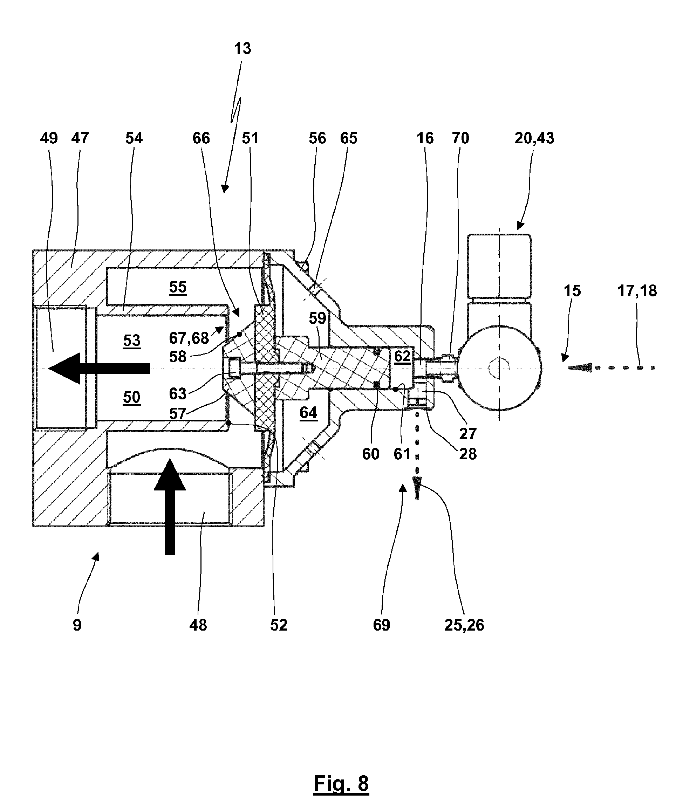

In den **Fig. 7** **und** **8** ist das Entlüftungsventil 13 in größerem konstruktivem Detail dargestellt. Dieses verfügt über ein Ventilgehäuse 47, welches einen Eingangsanschluss 48 und einen Ausgangsanschluss 49 besitzt. Der Eingangsanschluss 48 und der Ausgangsanschluss 49 münden in einen Innenraum 50, in welchem in der Schließstellung des Entlüftungsventils 13 gemäß Fig. 7 eine Membran 51 einen Ventilsitz 52 schließt, womit ein Übertritt zwischen dem Eingangsanschluss 48 und dem Ausgangsanschluss 49 abgesperrt ist. Der Eingangsanschluss 48 ist über die Verzweigung 8 mit der Versorgungsleitung 6 verbunden, während der Ausgangsanschluss 49 mit der Drucksenke 10 oder Entlüftung 11 verbunden ist. Für das dargestellte Ausführungsbeispiel setzt sich der Ausgangsanschluss 49 in das Innere des Ventilgehäuses 47 mit einem Ausgangskanal 53 fort, welcher radial außenliegend von einem hülsenartigen Fortsatz 54 begrenzt ist, dessen dem Ausgangsanschluss 49 abgewandter Endbereich den Ventilsitz 52 ausbildet. Radial außenliegend des Fortsatzes 54 ist eine ringförmige Eingangskammer 55 von dem Ventilgehäuse 47 ausgebildet, in welche der Eingangsanschluss 48 mündet. Auf der dem Ausgangsanschluss 49 gegenüberliegenden Seite ist der Innenraum 50 des Ventilgehäuses 47 verschlossen durch einen Gehäusedeckel 56. In dem ringförmigen oder flanschartigen Verbindungsbereich zwischen dem Gehäusedeckel 56 und dem Ventilgehäuse 47 ist die Membran 41 fixiert oder eingespannt.

Auf der dem Ventilsitz 52 zugewandten Seite trägt die Membran 51 einen Drosselkörper 57, welcher eine Mantelfläche 58 besitzt, welche sich in Richtung des Inneren des Ventilsitzes 52 verjüngt. Für das dargestellte Ausführungsbespiel ist die Mantelfläche 58 des Drosselkörpers 57 konisch ausgebildet, wobei sich in dem dargestellten Längsschnitt eine trapezförmige Außengeometrie des Drosselkörpers 57 ergibt. Auf der anderen Seite der Membran 51 ist an dieser ein Steuerkolben 59 befestigt. In dem der Membran 51 abgewandten Endbereich ist der Steuerkolben 59 unter Abdichtung durch ein Dichtelement 60 in einer Steuerbohrung 61 des Gehäusedeckels 56 verschieblich geführt. Der Gehäusedeckel 56 begrenzt im Bereich der Steuerbohrung 61 gemeinsam mit der der Membran 51 abgewandten Stirnseite des Steuerkolbens 59 einen Steuerraum 62, dessen Volumen von der Betriebsstellung des Steuerkolbens 59 (und damit der Membran 51 und des Entlüftungsventils 13) abhängig ist. Für das dargestellte Ausführungsbeispiel erfolgt die Befestigung des Drosselkörpers 57 und des Steuerkolbens 59 an der Membran 51 durch eine Schraube 63, welche sich von der dem Ausgangsanschluss 49 zugewandten Seite durch den Drosselkörper 57, die Membran 51 in den Steuerkolben 59 erstreckt mit Einschraubung der Schraube 63 in ein Innengewinde des Steuerkolbens 59. Durchaus möglich ist eine anderweitige Befestigung des Drosselkörpers 57 und/oder des Steuerkolbens 59 an der Membran 51, beispielsweise mittels Verkleben, oder eine integrale Ausbildung der Membran 51 mit dem Drosselkörper 57. Ein Rückraum 64 der Membran 51, welcher auf der der Eingangskammer 55 und dem Ausgangskanal 53 abgewandten Seite der Membran 51 angeordnet ist, ist über Entlüftungsbohrungen 65 des Gehäusedeckels 56 entlüftet.

In den Steuerraum 62 mündet stirnseitig der Steueranschluss 16, über welchen das Entlüftungsventil 13 mit dem Steuerdruck in dem Steuerstrang 15 beaufschlagt wird. Für dieses Ausführungsbeispiel ist die Durchflussleitung 27 ebenfalls von dem Gehäusedeckel 56 ausgebildet mit darin angeordneter Drossel 28 oder Blende.

### Die Funktionsweise des Entlüftungsventils gemäß Fig. 7 und 8 ist wie folgt:

Ist der Steueranschluss 16 mit einem Steuerdruck ps beaufschlagt, wirkt in dem Steuerraum 62 der Druck ps auf die von der Stirnseite des Steuerkolbens 59 ausgebildete Steuerfläche As womit eine Steuerkraft F_{S} wirkt, welche sich aus F_{S} = p_{S} x A_{S} ergibt. Während der Ausgangskanal 53 entlüftet ist, liegt über den Eingangsanschluss 48 in der Eingangskammer 55 der Druck pv des Versorgungsstrangs 3 an. Dieser Druck wirkt auf die Ringfläche A_{R} der Membran 51, welche sich radial zwischen dem Ventilsitz 52 und der äußeren Begrenzung der Eingangskammer 55 erstreckt. Der Druck pv übt somit auf die Membran 51 eine Öffnungskraft Fö aus, welche sich ergibt auf Fö = pv x A_{R}. Ist Fö < Fs, überwiegt die Steuerkraft Fs und die Membran 51 wird mit der sich ergebenden Differenzkraft Fö - Fs abdichtend gegen den Dichtsitz 52 gepresst. Andernfalls überwiegt die Öffnungskraft Fö, sodass die Membran 51 aus der Schließstellung gemäß Fig. 7 in die Öffnungsstellung gemäß Fig. 8 überführt wird. Durch eine Beeinflussung des Steuerdrucks ps kann das Öffnungsverhalten des Entlüftungsventils 13 verändert werden, insbesondere der Druck pv, für welchen das Entlüftungsventil 13 seine Schließstellung verlässt. Die Membran 15 bildet gemeinsam mit dem Drosselkörper 57 einen Ventilkörper 66 aus. In der Öffnungsstellung des Entlüftungsventils 13 gemäß Fig. 8 wird zwischen dem Ventilkörper 66 und dem Fortsatz 54 mit dem Ventilsitz 52 ein Übertritts- oder Öffnungsquerschnitt 67 gebildet, welcher hier ringförmig ausgebildet ist. Der Öffnungsquerschnitt 67 verbindet in der Öffnungsstellung den Eingangsanschluss 48 mit dem Ausgangsanschluss 49. Der Öffnungsquerschnitt 67 bildet hierbei eine Drossel 68. Hierbei ergibt sich die Drossel 68 durch den engen drosselnden Ringkanal, welcher radial außenliegend von dem Fortsatz 54 und dem Ventilsitz 52 begrenzt ist und radial innenliegend von der Mantelfläche 58 des Drosselkörpers 57 und der Membran 51 begrenzt ist. Je nach Betriebsstellung des Ventilkörpers 66, also der Entfernung der Membran 51 von dem Ventilsitz 52, ergibt sich eine veränderte Längserstreckung des wirksamen Drosselkanals der Drossel 68 und/oder ein veränderter Drosselquerschnitt der Drossel 68 zwischen der Mantelfläche 58 des Drosselkörpers 57 und dem Ventilsitz 52.

In Folge der Drosselwirkung ist der Druck in der Eingangskammer 55 größer als der Druck in dem Ausgangskanal 53, wobei der Druck in dem Ausgangskanal 53 dem Umgebungsdruck bzw. dem Druck der Drucksenke 10 vollständig oder weitestgehend entspricht. Durch diese Auswirkung der Drossel 58 verfügt das Entlüftungsventil 13 vorzugsweise über eine ausreichend kleine oder gar keine Hysterese.

Möglich ist, dass an dem Steueranschluss 16 das Druckregelventil 20, 43 über eine Steuerleitung 19 angeschlossen ist. Für das dargestellte Ausführungsbeispiel bilden hingegen das Entlüftungsventil 13 einerseits und das Druckregelventil 20, 43 andererseits eine Baueinheit 69. Hier ist das Druckregelventil 20, 43 mit einem Anschlussstutzen 70, der über ein Außengewinde verfügt, in ein entsprechendes Innengewinde des Steueranschlusses 16 eingeschraubt.

Bei dem Fluid einerseits in dem Versorgungsstrang 3 und dem Entlüftungsstrang 9 und andererseits in dem Steuerstrang 15 kann es sich im gleiche oder unterschiedliche beliebige Fluide handeln. Vorzugsweise handelt es sich hierbei um pneumatische Stränge 3, 9, 15.

Erfindungsgemäß erfolgt die Vorgabe des Schwellwertes des Drucks, für welchen die Schließstellung des Entlüftungsventils 13 verlassen wird, über die Vorgabe des Drucks an dem Steueranschluss 71 nicht mittels Energie, welche dem Versorgungsstrang 3 entnommen wird. Vielmehr wird hierzu separate Energie eines fluidisch entkoppelten Steuerstrangs 3 genutzt, welche über eine eigene Druckquelle 17 oder Pumpe 18 bereitgestellt wird.

Soll die Versorgungseinrichtung 2, insbesondere das Entlüftungsventil 13, Einsatz finden in einem explosionsgeschützten Raum, ist es von Vorteil, wenn in der Versorgungseinrichtung 2 oder dem Entlüftungsventil 13 keine elektrische Ansteuerung oder Vorsteuerung erfolgt, da bei einer elektrischen Ansteuerung ein Funke zu einer Explosion führen könnte. Für die Ausführungsbeispiele gemäß Fig. 2 und 3 können die dargestellten Bauelemente sämtlich in einem derartigen explosionsgeschützten Raum angeordnet sein, während dies für die Ausführungsbeispiele gemäß Fig. 4 bis 6 für alle Bauelemente bis auf den Aktuator 30, die Steuereinheit 42 und die elektropneumatische Ventileinheit 35 bzw. das Magnetventil 43 der Fall ist.

Eine Steuereinheit 42 kann auch bei einer Ansteuerung des Druckregelventils 20 oder der Vorsteuereinheit 35 berücksichtigen, wenn eine Umschaltung von einer ersten Anzahl von Abfüllzweigen, welche über den Versorgungsstrang 3 versorgt werden, auf eine zweite Anzahl von Abfüllzweigen erfolgt.

In den Zeichnungen sind für die Ausführungsform gemäß dem Stand der Technik gemäß Fig. 1 und die erfindungsgemäßen Ausführungsformen gemäß Fig. 2 bis 8 für sich hinsichtlich der Funktion und/oder Ausgestaltung grundsätzlich entsprechende Bauelemente dieselben Bezugszeichen verwendet worden, wobei allerdings für die Ausführungsform gemäß dem Stand der Technik die Bezugszeichen um den Summanden 100 erhöht worden sind.

Vorzugsweise verfügt die Abfüllanlage 1 oder die Versorgungseinrichtung 2 über eine elektronische Steuereinheit, mittels welcher eine Steuerung oder Regelung
a) der Pumpe 5,
b) der Pumpe 18,
c) der Einstelleinrichtung 29 des Druckregelventils 20,
d) des elektromotorischen Aktuators 30,
e) der Einstelleinrichtung 31 der Drossel 28 und/oder
f) der Abfülleinrichtung 7
erfolgt. Hierzu kann die elektronische Steuereinheit über eine geeignete Steuerlogik verfügen und, sofern eine Regelung erfolgt, über Eingänge verfügen, über welche der Steuereinheit Messsignale verfügen. Des Weiteren kann die Steuereinheit über Eingänge für manuelle Vorgaben durch den Betrieber und/oder für eine Kommunikation mit weiteren Steuereinheiten und/oder steuernde Ausgänge verfügen. Für einen besonderen Vorschlag der Erfindung verfügt die Steuereinheit über Steuerlogik, mittels welcher für den Fall, dass die Zahl der parallelen Abfüllpfade, über welche ein paralleles Abfüllen in unterschiedliche Behältnisse erfolgt, vergrößert wird, eine Erhöhung des Drucks in dem Versorgungsstrang 3 durch Erhöhung des Drucks in dem Steuerstrang 15 herbeigeführt wird. Vorzugsweise erfolgt in diesem Fall eine Druckerhöhung von 0,1 bis 0,8, insbesondere 0,2 bis 0,3 bar, wobei die Druckerhöhung auch von der Zahl der hinzukommenden Abfüllpfade abhängen kann.

### BEZUGSZEICHENLISTE

- 1: Abfüllanlage
- 2: Versorgungseinrichtung
- 3: Versorgungsstrang
- 4: Druckquelle
- 5: Pumpe
- 6: Versorgungsleitung
- 7: Abfülleinrichtung
- 8: Verzweigung
- 9: Entlüftungsstrang
- 10: Drucksenke
- 11: Entlüftung
- 12: Entlüftungsleitung
- 13: Entlüftungsventil
- 14: Proportionalventil
- 15: Steuerstrang
- 16: Steueranschluss
- 17: Druckquelle
- 18: Pumpe
- 19: Steuerleitung
- 20: Druckregelventil
- 21: Verzweigung
- 22: Anzeigeeinrichtung
- 23: Sensor
- 24: Verzweigung
- 25: Drucksenke
- 26: Entlüftung
- 27: Durchflussleitung
- 28: Drossel
- 29: Einstelleinrichtung
- 30: Aktuator
- 31: Einstelleinrichtung
- 32: Verzweigung
- 33: Vorratsbehälter
- 34: Steueranschluss
- 35: elektropneumatische Vorsteuereinheit
- 36: 2/2-Wege-Magnetventil
- 37: 2/2-Wege-Magnetventil
- 38: Drucksenke
- 39: Entlüftung
- 40: Steueranschluss
- 41: Steueranschluss
- 42: elektronische Steuereinheit
- 43: Druckregelventil
- 44: Magnetventil
- 45: Steueranschluss
- 46: Proportionalventil
- 47: Ventilgehäuse
- 48: Eingangsanschluss
- 49: Ausgangsanschluss
- 50: Innenraum
- 51: Membran
- 52: Ventilsitz
- 53: Ausgangskanal
- 54: Fortsatz
- 55: Eingangskammer
- 56: Gehäusedeckel
- 57: Drosselkörper
- 58: Mantelfläche
- 59: Steuerkolben
- 60: Dichtelement
- 61: Steuerbohrung
- 62: Steuerraum
- 63: Schraube
- 64: Rückraum
- 65: Entlüftungsbohrung
- 66: Ventilkörper
- 67: Öffnungsquerschnitt
- 68: Drossel
- 69: Baueinheit
- 70: Anschlussstutzen
- 71: Steueranschluss
- 72: Druckbegrenzungsventil
- 73: Entlüftung
- 74: Feder
- 75: Entlüftung

## Patentansprüche

1. Versorgungseinrichtung (2) für eine Abfüllanlage (1) für ein rieselfähiges oder schüttfähiges Material mit
a) einem Versorgungsstrang (3), welcher zur Bereitstellung eines Förderstroms eines Fluids, mit dem das Material transportiert wird, dient,
b) einem von dem Versorgungsstrang (3) abzweigenden Entlüftungsstrang (9), in welchem ein Entlüftungsventil (13) angeordnet ist und welcher zur Beeinflussung des Drucks in dem Versorgungsstrang (3) dient, und
c) einem Steuerstrang (15), welcher der Steuerung des Entlüftungsventils (13) dient,
**dadurch gekennzeichnet, dass**
d) der Versorgungsstrang (3) und der Steuerstrang (15) fluidisch voneinander entkoppelt sind.

2. Versorgungseinrichtung (2) nach Anspruch 1, **dadurch gekennzeichnet, dass** das Entlüftungsventil (13) als von dem Steuerstrang (15) fluidisch gesteuertes Proportionalventil (14) ausgebildet ist.

3. Versorgungseinrichtung (2) nach Anspruch 1 oder 2, **dadurch gekennzeichnet, dass** der Steuerstrang (15) über eine Drossel (28) mit einer Drucksenke (25) verbunden ist, so dass der Steuerstrang (15) unabhängig von der Betriebsstellung des Entlüftungsventils (13) ständig durchströmt ist.

4. Versorgungseinrichtung (2) nach einem der Ansprüche 1 bis 3, **dadurch gekennzeichnet, dass** das Entlüftungsventil (13) ohne Hysterese ausgebildet ist.

5. Versorgungseinrichtung (2) nach einem der vorhergehenden Ansprüche, **dadurch gekennzeichnet, dass** in dem Entlüftungsventil (13) in einer Öffnungsstellung ein Eingangsanschluss (48) über eine Drossel (68) mit dem Ausgangsanschluss (49) verbunden ist.

6. Versorgungseinrichtung (2) nach einem der vorhergehenden Ansprüche, **dadurch gekennzeichnet, dass** das Entlüftungsventil (13) eine Membran (51) aufweist, welche
a) in einer Schließstellung des Entlüftungsventils (13) einen Ventilsitz (52) verschließt,
b) in Richtung einer Öffnungsstellung von dem Druck in dem Versorgungsstrang (3) beaufschlagt ist und
c) mechanisch mit einem Steuerkolben (59) gekoppelt ist, welcher mit dem Druck in dem Steuerstrang (15) beaufschlagt ist und die Membran (51) in Richtung der Schließstellung beaufschlagt.

7. Versorgungseinrichtung (2) nach Anspruch 6 in Rückbeziehung auf Anspruch 5, **dadurch gekennzeichnet, dass** die Membran (51) einen Drosselkörper (57) ausbildet oder trägt, welcher mit dem Ventilsitz (52) die Drossel (68) bildet.

8. Versorgungseinrichtung (2) nach einem der vorhergehenden Ansprüche, **dadurch gekennzeichnet, dass** in dem Steuerstrang (15) ein Vorratsbehälter (33) angeordnet ist.

9. Versorgungseinrichtung (2) nach einem der vorhergehenden Ansprüche, **dadurch gekennzeichnet, dass** in dem Steuerstrang (15) ein Druckregelventil (20; 43) angeordnet ist.

10. Versorgungseinrichtung (2) nach einem der vorhergehenden Ansprüche, **dadurch gekennzeichnet, dass** der Druck in dem Steuerstrang (15) einstellbar ist.

11. Versorgungseinrichtung (2) nach Anspruch 10 in Rückbeziehung auf Anspruch 9, **dadurch gekennzeichnet, dass** das Druckregelventil (20)
a) über einen elektromotorischen Aktuator (30),
b) über eine elektropneumatische Vorsteuereinheit (35) oder
c) elektromagnetisch
gesteuert oder geregelt ist.

12. Versorgungseinrichtung (2) nach einem der Ansprüche 9 bis 11, **dadurch gekennzeichnet, dass** das Druckregelventil (20; 43) und das Entlüftungsventil (13) eine Baueinheit (69) bilden.

13. Versorgungseinrichtung (2) nach einem der vorhergehenden Ansprüche, **dadurch gekennzeichnet, dass**
a) der Druck in dem Steuerstrang in Schließrichtung auf das Entlüftungsventil (13) wirkt und/oder
b) der Druck in dem Versorgungsstrang in Öffnungsrichtung auf das Entlüftungsventil (13) wirkt.

14. Abfüllanlage (1) mit einer Versorgungseinrichtung (2) nach einem der vorhergehenden Ansprüche.
